Europäisches Patentamt

(19) European Patent Office

Office européen des brevets

(11) Numéro de publication : **0 274 311 B1**

(12)

# FASCICULE DE BREVET EUROPEEN

(45) Date de publication du fascicule du brevet :
27.02.91 Bulletin 91/09

(51) Int. Cl.⁵ : **G21C 7/20**

(21) Numéro de dépôt : 87402776.6

(22) Date de dépôt : 07.12.87

(54) **Dispositif d'amortissement de chute de barres absorbantes pour assemblage de combustible nucléaire.**

(30) Priorité : 10.12.86 FR 8617290

(43) Date de publication de la demande :
13.07.88 Bulletin 88/28

(45) Mention de la délivrance du brevet :
27.02.91 Bulletin 91/09

(84) Etats contractants désignés :
BE CH DE ES GB LI SE

(56) Documents cités :
EP-A- 0 159 509
EP-A- 0 161 170
DE-B- 1 232 281
GB-A- 2 143 613

(73) Titulaire : FRAMATOME
Tour Fiat 1, Place de la Coupole
F-92400 Courbevoie (FR)
Titulaire : COMPAGNIE GENERALE DES
MATIERES NUCLEAIRES (COGEMA)
2, rue Paul Dautier B.P. 4
F-78141 Velizy-Villacoublay (FR)

(72) Inventeur : Canat, Jean-Noel
75, rue des Aqueducs
F-69005 Lyon (FR)

(74) Mandataire : Fort, Jacques et al
CABINET PLASSERAUD 84, rue d'Amsterdam
F-75009 Paris (FR)

## Description

La présente invention concerne les dispositifs d'amortissement de chute de barres absorbantes pour assemblage combustible de réacteur nucléaire refroidi par circulation d'un fluide sensiblement incompressible, tel qu'un liquide, du type comprenant des moyens à cylindre et piston laissant au fluide un trajet étranglé d'échappement hors du cylindre lors de l'enfoncement du piston à partir d'une position de repos vers laquelle le piston est sollicité par un ressort.

L'invention s'applique notamment aux réacteurs dont les barres absorbantes comprennent une grappe de crayons absorbants parallèles fixés à des bras d'une araignée ayant un pommeau central raccordable à un mécanisme de déplacement vertical. Elle trouve une application particulièrement importante, bien que non exclusive, dans les réacteurs refroidis et modérés par de l'eau sous pression.

On utilise des barres absorbantes du genre ci-dessus, dont les crayons absorbants contiennent un poison neutronique, pour commander la réactivité dans le coeur du réacteur, en insérant plus ou moins les crayons. Pour provoquer un arrêt d'urgence du réacteur, toutes les barres de commande sont simultanément insérées dans le coeur en les libérant de façon qu'elles s'enfoncent sous l'action de leur propre poids. Pour amortir le choc qu'elles subissent lors de la venue en butée du pommeau contre la plaque supérieure de coeur du réacteur ou contre l'embout supérieur de l'assemblage combustible avec lequel elles sont associées, on a déjà proposé de les munir d'un amortisseur de choc.

Le document EP-A-159 509 décrit un dispositif d'amortissement du type ci-dessus défini, ayant un cylindre ménagé dans le pommeau et dans lequel coulisse un piston repoussé dans une position de saillie vers le bas par des moyens élastiques contenus dans le cylindre. A partir du moment où le piston arrive en butée contre la plaque supérieure de coeur, le mouvement vers le bas est freiné par la compression des moyens élastiques et par la perte de charge subie par le liquide qui s'échappe du cylindre entre la paroi de ce dernier et le piston.

Un tel dispositif d'amortissement n'a cependant qu'un effet limité. En particulier, l'effet d'amortissement apporté par la perte de charge ne change pratiquement par au cours de l'enfoncement du piston et seule la raideur variable du ressort assure la progressivité. Le dispositif intégré dans le pommeau contrarie la circulation de liquide et le refroidissement. Le dispositif n'est pas démontable pour remplacement ou réutilisation sur une autre grappe.

On utilise largement, à l'heure actuelle, un dispositif d'amortissement de chute pour les barres comprenant une grappe de crayons qui utilise la perte de charge qu'impose à l'écoulement de fluide réfrigérant chassé des tubes guides par les crayons lors de la chute de la barre, un étranglement ménagé à la partie inférieure des tubes.

Cette solution impose des contraintes gênantes sur la constitution des tubes guides et elle augmente notablement leur coût.

L'invention vise à fournir un dispositif d'amortissement répondant mieux que ceux antérieurement connus aux exigences de la pratique, notamment en ce qu'il est distinct et éventuellement séparable des composants entre lesquels on cherche à réduire le choc et en ce qu'il améliore la répartition des efforts sans gêner de façon appréciable la circulation du fluide réfrigérant.

Pour atteindre ce résultat, l'invention utilise le fait que, contrairement aux assemblages combustibles actuellement utilisés, certains assemblages ne sont pas maintenus dans le coeur du réacteur par appui d'une plaque supérieure de coeur sur l'embout supérieur mais par des moyens qui ne gênent pas l'accès à l'embout supérieur. Pour trouver un exemple de tels assemblages envisagés on pourra se reporter par exemple au document EP-A-O 156 686.

L'invention propose en conséquence un dispositif du type ci-dessus défini caractérisé en ce que les moyens à cylindre et piston comprennent au moins un couple de cylindres disposés symétriquement par rapport à l'axe de l'assemblage et recevant des pistons, interposé entre une plaque solidaire de l'embout supérieur de l'assemblage et une plaque mobile disposée de façon à recevoir l'impact de la barre.

Le dispositif peut être solidarisé de façon permanente de l'embout supérieur ou au contraire fixé de façon démontable, de façon à permettre de l'utiliser sur plusieurs assemblages successifs. Dans le second cas il suffit que la plaque solidaire de l'assemblage soit montée de façon amovible sur l'embout supérieur, qui peut se réduire alors à une platine. Pour réduire la perte de charge subie par le réfrigérant à sa traversée du dispositif, la plaque solidaire de l'embout supérieur peut présenter une partie centrale surélevée et/ou la plaque recevant l'impact de la barre peut présenter une partie centrale décalée vers le bas.

Pour ménager le trajet étranglé d'échappement, chaque cylindre peut être dimensionné pour ménager un jeu radial autour du piston et/ou peut être percé de paires de trous répartis à intervalles réguliers le long du trajet de déplacement du piston. Les moyens élastiques peuvent comporter un ressort hélicoïdal disposé autour de chaque ensemble cylindre-piston, entre les deux plaques.

L'invention sera mieux comprise à la lecture de la description qui suit d'un mode particulier d'exécution, donné à titre d'exemple non limitatif. La description se réfère aux dessins qui l'accompagnent, dans lesquels :

    - la figure 1 est un schéma en élévation et en coupe partielle montrant les éléments d'un assemblage de combustible concernés par l'invention ;

- la figure 2 montre à grande échelle l'un des ensembles piston-cylindre du dispositif de la figure 1 ;

- la figure 3 est une vue partielle de dessous montrant une répartition possible des ensembles piston-cylindre par rapport aux crayons d'une barre.

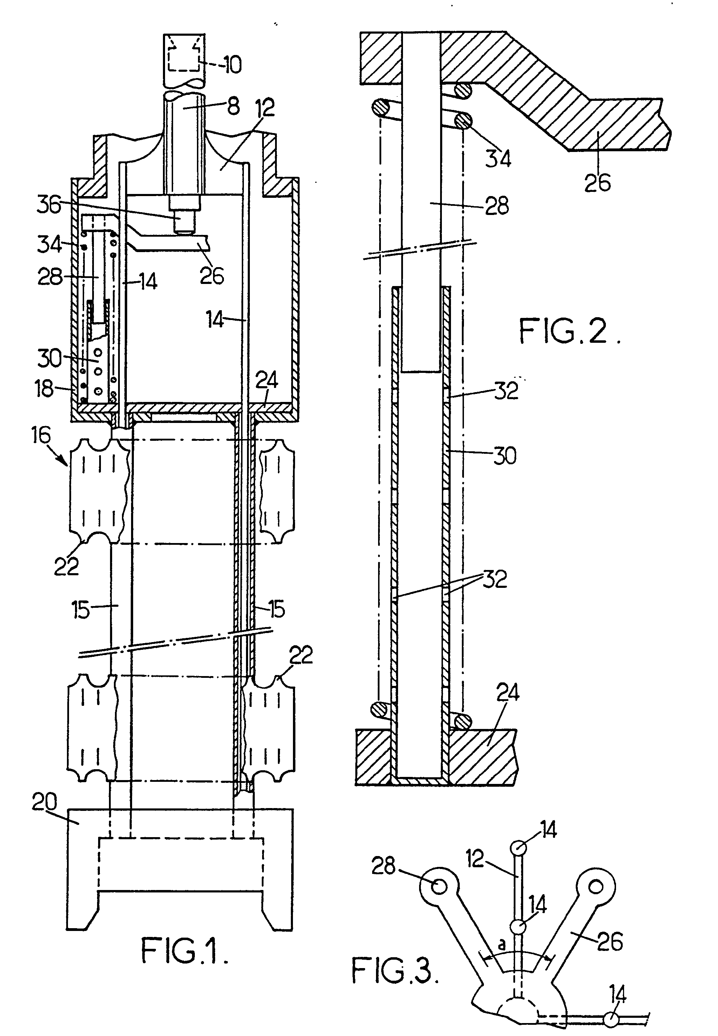

Le dispositif qui sera maintenant décrit est utilisable dans les réacteurs à eau sous pression dont chaque barre absorbante comporte un pommeau 8 muni de moyens 10 d'accrochage d'une tige de commande (non représentée) et d'ailettes radiales 12 qui portent des crayons 14. Dans la position où la grappe ainsi constituée est montrée en figure 1, les crayons sont engagés dans des tubes-guides 15 appartenant à un assemblage de combustible 16.

L'invention est utilisable aussi bien dans le cas où la barre absorbante constitue une barre de commande dont les crayons contiennent un poison neutronique que dans celui où les barres sont destinées à provoquer une variation du spectre d'énergie des neutrons dans le coeur.

L'assemblage 16 présente une constitution générale connue : il comprend un embout supérieur 18 et un embout inférieur 20 reliés par les tubes-guides 15 et des grilles 22 réparties le long des tubes-guides 15 et destinées à maintenir les crayons de combustible (non représentés).

Le dispositif d'amortissement solidaire de l'embout supérieur 18 comporte une plaque 24, solidarisée de l'embout 18 de façon permanente dans le mode de réalisation montré en figure 1, et qu'on dénommera par la suite "plaque fixe". Le dispositif comprend une second plaque 26 destinée à recevoir l'impact du pommeau 8 et à se déplacer verticalement par rapport à la plaque fixe 24. Cette plaque 26 sera dénommée "plaque mobile".

Entre les plaques 24 et 26 sont interposés un ou plusieurs couples d'ensembles cylindre-piston, les ensembles d'un même couple étant placés symétriquement par rapport à l'axe de l'assemblage. Dans le mode de réalisation montré en figure 3, quatre ensembles sont prévus, suivant deux directions faisant un angle a différent de 90°. Chacun des pistons 28 est fixé à un bras de la plaque 26 décalé des ailettes 12 et coulisse dans un cylindre correspondant 30 solidarisé de façon permanente de la plaque fixe 24. Chaque cylindre 30 peut se limiter à une chemise mince, étant donné que les efforts de pression qu'il subit sont faibles. Un jeu annulaire, de quelques dixièmes de mm d'épaisseur radiale par exemple, est ménagé entre le piston 28 et le cylindre 30 pour fournir au fluide un trajet de fuite où le fluide est laminé. Pour limiter la surpression à l'intérieur des cylindres 30, ne pas provoquer des efforts importants sur les structures et améliorer la progressivité, des paires de trous 32 (figure 2) sont ménagés à intervalles réguliers le long du cylindre 30. Le diamètre des trous et leur répartition sont choisis pour maintenir la pression qui règne dans les cylindres 30 à une valeur aussi constante que possible au cours de la course de descente du piston 28, tout en absorbant suffisamment d'énergie pour réduire la vitesse de la barre à une valeur très faible lorsque les pistons arrivent en fin de course. Un ressort hélicoïdal 34 est placé autour de chaque cylindre. Les ressorts 34 ont deux rôles. Ils maintiennent la plaque mobile 26 en position haute lorsque la grappe ne repose par sur elle, c'est-à-dire réarment le dispositif amortisseur. Ils participent à l'absorption d'énergie lorsque la plaque mobile 26 reçoit le choc du pommeau de la grappe. Ce pommeau peut lui-même comporter un amortisseur complémentaire 36 de faible encombrement longitudinal.

Le fonctionnement du dispositif qui vient d'être décrit est le suivant.

Lors de l'impact initial du pommeau contre la plaque mobile 26, la vitesse du pommeau est maximale. Le fluide contenu dans les cylindres 30 est chassé par les pistons par les trous 32 et, vers le haut, par le jeu annulaire. Le coefficient du perte de charge du trajet de fuite est faible mais, la vitesse étant maximale, la perte de charge subie par le fluide est élevée. De plus, le jet dirigé vers le haut qui s'échappe par la fuite annulaire exerce une force de freinage sur la plaque mobile 26. La force de rappel exercée par le ressort 34 est minimale.

A mi-course des pistons 28, la vitesse d'enfoncement a notablement décru. Mais la section de fuite est réduite du fait que les pistons ont masqué des paires de trous de fuite. Le coefficient de perte de charge augmente notablement du fait de la diminution du nombre de trous et de l'allongement du trajet de fuite annulaire. Les ressorts 34 opposent à l'écrasement une résistance augmentée.

On obtient ainsi un phénomène de compensation qui permet de maintenir la pression qui règne dans le cylindre 30 à une valeur approximativement constante.

En fin de course, juste avant l'arrêt, la section de fuite est minimale et donc le coefficient de perte de charge maximum. Mais la compression du ressort est maximale. Là encore on obtient un effet de compensation.

Un équilibre s'établit, la plaque mobile étant dans une position telle que le ressort 34 exerce une force dirigée vers le haut égale au poids de la grappe.

La plaque mobile 26 a avantageusement la forme creuse montrée sur la figure 1 qui permet de minimiser la gêne apportée à l'écoulement pendant le fonctionnement normal du réacteur. La plaque fixe 24 peut, elle aussi, présenter une forme renflée, mais cette fois vers le haut.

## Revendications

1. Dispositif d'amortissement de chute de barres pour assemblage combustible de réacteur nucléaire refroidi par un fluide sensiblement incompressible, comprenant des moyens à cylindre (30) et piston (28) laissant au fluide un trajet étranglé d'échappement hors du cylindre lors de l'enfoncement du piston à partir d'une position de repos vers laquelle le piston est sollicité par un ressort (34), caractérisé en ce que lesdits moyens comprennent au moins un couple d'ensembles cylindre-piston (28, 30) disposés symétriquement par rapport à l'axe de l'assemblage, interposés entre une plaque fixe (24) solidaire de l'assemblage (16) et une plaque mobile (26) disposée de façon à recevoir l'impact de la barre.

2. Dispositif selon la revendication 1, caractérisé en ce qu'il comprend deux couples d'ensembles cylindre (30) piston (28) portés par des bras de la plaque mobile (26).

3. Dispositif selon la revendication 1 ou 2, caractérisé en ce que le cylindre (30) et le piston (28) de chaque ensemble sont constitués de façon que la section de fuite offerte au fluide chassé du cylindre par le piston diminue au fur et à mesure de l'enfoncement du piston.

4. Dispositif selon la revendication 3, caractérisé en ce que la section de fuite est constituée par des paires de trous (32) ménagés dans la paroi du cylindre et successivement recouverts par le piston lors de son enfoncement et par un jeu annulaire entre piston et cylindre.

5. Dispositif selon l'une quelconque des revendications précédentes, caractérisé en ce qu'un ressort de rappel (34) est disposé autour de chaque ensemble cylindre-piston (30, 28) et interposé entre les plaques (24, 26).

6. Dispositif selon l'une quelconque des revendications précédentes, caractérisé en ce que la plaque mobile (26) présente une partie centrale en creux réduisant la perte de charge imposée au fluide réfrigérant lors du fonctionnement normal.

7. Dispositif selon l'une quelconque des revendications précédentes, caractérisé en ce que la plaque fixe (24) est solidarisée de l'embout supérieur (18) de l'assemblage par des moyens démontables.

8. Dispositif selon la revendication 1 d'amortissement de chute de barres constituées par une grappe de crayons portés par des ailettes (12) solidaires d'un pommeau (8), caractérisé en ce que chaque piston (28) est porté par un bras de la plaque mobile (26) décalé angulairement par rapport aux ailettes (12) de la grappe.

## Claims

1. Device for absorbing the shock of the fall of bars in a nuclear reactor fuel assembly which is cooled by a substantially incompressible fluid, comprising means having a cylinder (30) and a piston (28), providing for the fluid a restricted laak path out of the cylinder when the piston is driven in from a rest position toward which the piston is urged by a spring, **characterized in that** said means comprise at least a pair of cylinder-piston units (28, 30) disposed symmetrically with respect to the axis of the assembly, interposed between a stationary plate (24) fast with the assembly (16) and a movable plate (26) disposed so as to receive the impact of the bar.

2. Device according to claim 1, **characterized in that** it comprises two pairs of units having a cylinder (30) and a piston (28) carried by arms of a movable plate (26).

3. Device according to claim 1 or 2, **characterized in that** the cylinder (30) and the piston (28) of each unit are so constructed that the leakage cross-sectional flow area offered to the fluid driven out of the cylinder by the piston decreases as the piston is driven in.

4. Device according to claim 3, **characterized in that** the leakage cross-sectional flow area consists of pairs of holes (32) formed in the wall of the cylinder and successively covered by the piston during its entering movement and of an annular clearance between the piston and the cylinder.

5. Device according to any one of the preceding claims, **characterized in that** a return spring (34) is located around each cylinder-piston unit (30, 28) and located between the plates (24, 26).

6. Device according to any one of the preceding claims, **characterized in that** the movable plate (26) has a hollowed out central part which reduces the head loss impressed to the cooling fluid during normal operation.

7. Device according to any one of the preceding claims, **characterized in that** the stationary plate (24) is secured to the upper nozzle (18) of the assembly by removable means

8. Device according to claim 1 for absorbing the shock due to fall of bars each consisting of a cluster of rods carried by fins (12) fast with a pommel (8), **characterized in that** each piston (28) is carried by an arm of the movable plate (26) which is angularly offset with respect to the fins (12) of the cluster.

## Ansprüche

1. Aufpralldämpfer für Stäbe einer Brennelementkassette eines Kernreaktors, der mit einer im wesentlichen inkompressiblen Flüssigkeit gekühlt wird mit Kolben (28)-Zylinder (30)-Einheiten, die dem Fluid ausgehend von einer Ruhestellung, in der der Kolben durch eine Feder gehalten wird, einen engen Ablaßweg aus dem Zylinder während des Eindringens des Kolbens in den Zylinder offenläßt, **dadurch gekennzeichnet,** daß die Kolben-Zylinder-Einheit mindestens zwei Kolben-Zylinder-Paare (28, 30) aufweist, die symmetrisch bezüglich der Achse der Brennelementkassette zwischen einer festen Platte (24), die an der Brennelementkassette (16) befestigt ist und einer beweglichen Platte (26), die so angeordnet ist, daß sie den Aufprall des Stabs aufnehmen kann, angeordnet sind.

2. Vorrichtung nach Anspruch 1, gekennzeichnet durch zwei Paare von Kolben-Zylinder-Einheiten (28, 30), die von den Armen der beweglichen Platte (26) getragen werden.

3. Vorrichtung nach Anspruch 1 oder 2, dadurch gekennzeichnet, daß der Zylinder (30) und der Kolben (28) einer jeden Einheit so ausgebildet sind, daß der durch das durch den Kolben aus dem Zylinder verdrängte Fluid offengelassene Verdrängungsquerschnitt mit steigendem Eindringen des Kolbens kleiner wird.

4. Vorrichtung nach Anspruch 3, dadurch gekennzeichnet, daß der Auslaßquerschnitt aus Lochpaaren (32) besteht, die in der Zylinderwandung vorgesehen sind und die aufeinanderfolgend durch den Kolben während dessen Eindringen bedeckt werden und durch das ringförmige Spiel zwischen dem Kolben und dem Zylinder.

5. Vorrichtung nach einem der vorstehenden Ansprüche, dadurch gekennzeichnet, daß eine Rückholfeder (34) um jede Kolben-Zylinder- Einheit (28, 30) angeordnet ist, die zwischen den Platten (24, 26) liegt.

6. Vorrichtung nach einem der vorstehenden Ansprüche, dadurch gekennzeichnet, daß die bewegliche Platte (26) einen mittleren schalenförmigen Bereich aufweist, der den Druckverlust mindert, der während des normalen Betriebs im Kühlfluid erfolgt.

7. Vorrichtung nach einem der vorstehenden Ansprüche, dadurch gekennzeichnet, daß die feste Platte (24) am oberen Ende (18) der Brennelementkassette mit demontierbaren Organen befestigt ist.

8. Vorrichtung zur Dämpfung des Aufpralls von zu einem Bündel zusammengefaßter Stäbe, die von einem Kopf (8) ausgehenden Armen getragen sind, nach Anspruch 1, dadurch gekennzeichnet, daß jeder Kolben (28) an einem Arm der beweglichen Platte (26) getragen wird, der wiederum winkelmäßig gegenüber den Armen (12) des Stabbündels versetzt ist.

FIG.1.

FIG.2.

FIG.3.